# EUROPÄISCHE PATENTSCHRIFT

(11) **EP 1 363 039 B1**
(45) Veröffentlichungstag und Bekanntmachung des Hinweises auf die Patenterteilung: **29.03.2006**
(21) Anmeldenummer: 03009347.0
(22) Anmeldetag: 24.04.2003
(51) Int. Cl.: F16D 65/092

(54) **Bremsbelag mit Schutzlippe für Scheibenbremse**
Disc brake pad with protective lip
Patin de frein à disque avec lèvre protectrice

(30) Priorität: 17.05.2002 DE 10222110
(43) Veröffentlichungstag der Anmeldung: 19.11.2003
(73) Patentinhaber: Federal-Mogul Friction Products GmbH, 65520 Bad Camberg (DE)
(72) Erfinder: Emmett, Robert A., 56477 Rennerod (DE); Strauss, Wilfried, 69483 Wald-Michelbach (DE)
(74) Vertreter: Becker Kurig Straus

(56) Entgegenhaltungen:
- GB-A- 2 013 804
- US-A- 3 433 328
- US-B1- 6 173 821

## Beschreibung

Die vorliegende Erfindung betrifft einen Bremsbelag, einen Bremssattel mit Bremsbelag und eine Scheibenbremse mit diesen Teilen. Insbesondere betrifft die vorliegende Erfindung Bremsbeläge, die durch eine Aufnahmeöffnung in einen Bremssattel gesteckt werden. Des weiteren betrifft die vorliegende Erfindung Scheibenbremsen für besonders schwierige Umweltbedingungen, wie z.B. in Geländefahrzeugen, dem "Off-Road" Bereich, bei Expeditionsfahrzeugen oder z.B. der Landwirtschaft.

Scheibenbremsen setzen sich üblicherweise aus mindestens einer Bremsscheibe und mindestens einem Bremssattel mit mindestens zwei Bremsbelägen zusammen. Scheibenbremsen werden in Kraftfahrzeugen und in Maschinen eingesetzt, um Wellen oder Räder abzubremsen. In dem Bremssattel verwendete Bremsbeläge bestehen üblicherweise aus einem Trägerelement und einem Reibbelag. Die Hauptvorteile von Scheibenbremsen gegenüber heute teilweise noch üblichen Tmmmelbremsen ist das geringere Gewicht, die bessere Wärmeabfuhr und die leichtere Wartung.

Solche Bremsbeläge sind z.B. in der deutschen Schrift DE 197 05 836 A1 dargestellt. Die DE 197 05 836 A1 beschreibt einen Bremsbelag, deren Träger einen Sandwichaufbau aufweist, um Gewicht zu sparen und die mechanischen Eigenschaften des Bremsbelags zu verbessern.

Die Bremsbeläge werden bei hoher Beanspruchung oft durch sogenannte Druckverteilerplatten möglichst gleichmäßig belastet, um ungleichmäßigen Abrieb der Bremsbeläge zu vermeiden. Die Druckverteilerplatten ermöglichen es außerdem, dünnere und damit leichtere Bremsbeläge zu verwenden. Der Einsatz von Druckverteilerplatten und sogenannten Niederhaltefedern wird z.B. in der EP 0 248 385 B1 erläutert. Die EP 0 248 385 B1 verdeutlicht besonders die Verwendung und die Notwendigkeit von Niederhaltefedem. Die Niederhalter dienen zum Fixieren der Bremsbeläge im Bremsenträger.

Um das Gewicht der Bremsbeläge zu verringern, und das Herstellungsverfahren zu vereinfachen, kann der Bremsbelag und die Trägerplatte aus einem Material hergestellt werden. Dies wird besonders deutlich in der Druckschrift EP 0 745 781 A2 dargestellt. In dieser Schrift werden Bremsbeläge dargestellt, deren Trägerplatte und Reibbelag aus dem selben Material aufgebaut sind. Dieses ergibt den Hauptvorteil, dass der gesamte Bremsbelag in einem Arbeitsgang hergestellt werden kann.

Bei den heute üblichen Scheibenbremsen wird der Bremsbelag über eine Öffnung von aussen in den Bremssattel gesteckt und mit Niederhaltefedern und Verriegelungen in der Bremse gehalten. Diese Form der Befestigung hat den Vorteil, dass der Bremssattel zum Auswechseln der Bremsbeläge nicht abgebaut oder abgenommen werden muss. Somit ist es möglich, z.B. bei einem PKW, dass nur das Rad abgebaut zu werden braucht, um die Bremsbeläge zu wechseln. Die für die Montage erforderliche Öffnung im Bremssattel hat aber den Nachteil, dass in diesem Bereich die Kombination Belag - Feder - Verriegelung - Bremsscheibe frei liegt. Dies bedeutet, dass Schmutz wie z.B. Rollsplitt, Teer Staub, oder sogar ölhaltige Partikel durch diese Öffnung eindringen können. Die Partikel können sich z.B. zwischen den Bremszylindem, und den Bremsbelägen setzen und zu Schrägverschleiss führen. Wenn die Verunreinigung zwischen den Bremsbelag und die Bremsscheibe kommt, kann ein Stück Rollsplitt z.B. die Bremsscheibe zerstören. Oder es können andere Probleme, wie z.B. Klemmen der Beläge, Schrägverschleiss, Abbrechen von Teilen, zu einem Verlust der Bremsleistung und dergleichen führen.

Eine Möglichkeit das Eindringen von Schmutz zwischen Bremsscheibe und Reibbelag zu verhindern ist beispielsweise in der Deutschen Offenlegungsschrift 26 53 607 offenbart. In dem Dokument wird mit Hilfe von Schabblechen versucht das eindringen von Schmutz zwischen Reibbelag und Bremsscheibe zu verhindern. Das Prinzip lässt sich am besten mit dem Wort "Bremscheibenwischer" beschreiben. Die Nachteile des vorgestellten Systems bestehen z.B. darin, dass die Schmutzabstreifer permanent mit der Bremsscheibe in Berührung sind, und somit auch ohne einem Bremsvorgang permanentem Verschliess unterworfen sind. Die Wirkung des vorgeschlagenen Systems steigt mit der Anpresskraft der Schmutzabstreifer, womit aber auch der Verschleiss und die Bremswirkung des Systems zunimmt.

Eine andere Möglichkeit, das Eindringen von Schmutz zwischen Bremsscheibe und Reibbelag zu verhindern ist der amerikanischen Patentschrift US 6,173,821 B1 offenbart. Im diesem Dokument wird ein Scheibenbremsenschutz bereitgestellt, der an der Bremszange befestigt ist, und die Scheibenbremse in Richtung der Felge eines Kraftfahrzeugs umschließt. Dadurch können kleine Steine und Sand die bzw. der durch die Löcher einer gelochten Felge hinter die Felge gelangt sind die Funktion der Scheibenbremse nicht beeinträchtigen, da sie von dem Bremsscheibenschutz davon abgehalten werden, in dem Bereich der Bremsscheibe bzw. der Bremszange zu gelangen. Die Nachteile des vorgestellten Systems bestehen z.B. darin, dass der Bremsscheibenschutz selbst bei die abgenommener Felge die Sicht auf die Bremsbeläge und deren Verschleisszustand verwehrt. Die Wartung des Fahrzeugs wird durch den Bremsscheibenschutz erschwert, der vor dem Wechseln der Bremsbeläge entfernt werden muss.

Eine Aufgabe der vorliegenden Erfindung ist es, einen Bremsbelag und eine Scheibenbremse bereitzustellen, die die vorstehenden Probleme einfach und billig beseitigt oder zumindest verringert.

Eine weitere Aufgabe der Erfindung ist es, einen Bremsbelag bereitzustellen, der geeignet ist, die vorstehend beschriebenen Problemen in bestehenden Bremssätteln und Scheibenbremsen zu lösen.

Eine weitere Aufgabe der vorliegenden Erfindung ist es, den gestiegenen Ansprüchen an Sicherheit und Komfort an eine Bremsanlage Rechnung zu tragen.

Diese Aufgabe wird gelöst durch einen Bremsbelag mit den Merkmalen der Anspruchs 1 und mit einem Bremsbelagsatz mit den Merkmalen des Anspruchs 8. Bevorzugte und vorteilhafte Ausführungsformen sind in den abhängigen Ansprüchen beschrieben.

Gemäss einer Ausführungsform der vorliegenden Erfindung wird ein Bremsbelag angegeben, der durch seine besondere Gestaltung mit einer Lippe verhindern kann, dass Schmutz oder andere Partikel in den Zwischenraum zwischen Reibbelag und Bremsscheibe eindringen kann. Der Bremsbelag ist durch seine Gestaltung besonders für eine Scheibenbremse mit einer Bremsscheibe ausgelegt. Der Bremsbelag besitzt dabei mindestens einen Reibbelag mit mindestens einer der Bremsscheibe zugewandten Reibfläche. Der Bremsbelag gemäss dieser Ausführungsform der vorliegenden Erfindung ist durch mindestens eine Lippe gekennzeichnet, die an dem Bremsbelag einstückig an der Trägerplatte angeordnet ist. Dabei steht die Lippe über die Reibfläche des Reibbelags vor und überdeckt die Mantelfläche der Bremsscheibe, die von der Bremszange umfasst wird. Die Überdeckung ist dabei so ausgeführt, dass bei neuen Bremsbelägen in der Ruhestellung die Lippe gerade an der Ebene anliegt, die durch den Spalt zwischen Reibbelag und Bremsscheibe definiert ist. Damit wird der Spalt gegen direkte Schmutzeinwirkung verschlossen. Da diese Abdichtung nicht vollständig druckdicht ist, wird das Eindringen von Schmutz oder Fremdkörpern zwischen Bremsschiebe und einem der Bremsbeläge zumindest erschwert, wenn nicht verhindert.

Im Folgenden wird nicht bei der Erwähnung der mindestens einen Lippe nicht zwischen Mehrzahl und Einzahl unterscheiden. Es sollte daher hier betont werden, dass für den erfindungsgemässen Bremsbelag nur eine Lippe notwendig ist, die die Merkmale der Unteransprüche aufweisen kann.

In einer bevorzugten Ausführungsform ist mindestens eine der Lippen im wesentlichen elastisch. Dadurch kann die Lippe beispielsweise aus Gummi, oder einem ähnlich elastischen Material ausgeführt werden. Die Lippe kann auch als Bürste ausgeführt werden, die im wesentlichen einen gleichwertigen Schutz gegen Partikel und Flüssigkeiten bieten kann. Die Bürste könnte beispielsweise aus Mineral- oder anderen Fasern bestehen. Die Fasern müssen nur so gewählt werden, dass sie bei einer gewählten Höhe der Bürstenlippe Steif genug sind, um Partikel von dem Spalt fernzuhalten, und dicht genug stehen, um z.B. durch Kappilarwirkung das eindringen von Flüssigkeit zu vermeiden. Es lassen sich auch teil-elastische Bürstenlippen herstellen, in dem die Fasern nur an der Montagestelle zusammengeharzt werden, und somit ein starres Fundament bilden das in eine Bürstenlippe ausläuft.

Bevorzugt ist mindestens eine Lippe des Bremsbelages im wesentlichen starr. Durch eine starre Lippe kann z.B. verhindert werden, dass die Lippe durch Verformen in den Spalt zwischen Reibbelag und Bremsscheibe gelangen kann. Weiter lässt sich eine starre Lippe auch dünner und leichter konstruieren als eine elastische Lippe. Eine Starre Lippe lässt sich leichter an einem Starren Bremsbelag befestigen.

Bevorzugt ist mindestens einer der Lippen des Bremsbelags einstückig aus einem Teil des Bremsbelags gebildet. Vorzugsweise sind der Reibbelag und/oder die Trägerplatte und die mindestens eine Lippe integral aus einem Material hergestellt. Dadurch kann eine preisgünstige Produktion des Bremsbelags sichergestellt werden. Das Material der Lippe kann dabei die mechanischen Eigenschaften des Reibbelags oder der Trägerplatte aufweisen. Das Material der Trägerplatte und des Reibbelags kann aber durch eine unterschiedliche Mikro- oder Makro-Struktur oder durch eine unterschiedliche Dichte gekennzeichnet sein. Dasselbe gilt natürlich auch für die mindestens eine Lippe. Die notwendigen Festigkeitswerte der Lippe kann variiert werden, z.B. können die Lippe dicke oder dünner ausgeführt werden. Eine andere Möglichkeit der Veränderung der mechanischen Eigenschaften der Lippe ist die partielle Prozessführung, d.h. das Material, beispielsweise ein Duroplast besonders zu verdichten oder zu vernetzen. Damit wird die Fertigung enorm vereinfacht.

Bevorzugt wird der Bremsbelag und die Lippe aus separaten Teilen gebildet oder zusammengesetzt. Bevorzugt wird die Lippe aus einem anderen Material als die Reibbeläge und oder die Trägerplatte bestehen. Damit kann z.B. die Lippe aus einem gummiartigen Material bestehen oder kann aus Kunststoff oder einem Metallblech bestehen das z.B. an dem Bremsbelag durch Schweissen einstückig befestigt wird. Das separate Lippenteil kann auch oder während des Herstellungsprozesses in den Bremsbelag eingegossen / eingeharzt oder eingesintert werden.

Vorzugsweise weist der Bremsbelag mindestens ein Aufnahmeelement für Zubehör auf. Bevorzugt weist die Scheibenbremse mit Bremssattel und/oder Bremsbelag weitere Anbauelemente für Zubehör auf. Die Scheibenbremse kann weiteres Zubehör in oder an der Bremsscheibe aufweisen, wie Verschleissanzeigen oder Temperaturfühler für die Bremsscheibe. Weiters kann der Bremsbelag sich dadurch auszeichnen, dass in den Bremsbelag Aufnahmevorrichtungen für Zubehör eingearbeitet sind. Das Zubehör kann auch während der Herstellung in den Bremsbelag aufgenommen, bzw. fest mit dem Bremsbelag verbunden werden. Der Bremssattel und eventuell auch die Bremsscheibe können dabei mit Aufnahme- bzw. Versorgungselementen versehen sein, um das oder weiteres Zubehör aufzunehmen, bzw. zu versorgen. Im einfachsten Fall ist das Zubehör eine weitere Niederhaltefeder, die benötigt wird, um die Scheibenbremse beim Einsatz in einer Radaufhängung vor Schädigung zu bewahren. Das Zubehör kann ein in den Bremsbelag eingearbeiteter oder an dem Bremsbelag befestigter Verschleisssensor sein, der anzeigt, dass der Bremsbelag ausgewechselt werden muss. Der Vorteil in Fahrzeugen gegenüber den bisher üblichen Verschleissanzeigern besteht darin, dass der Verschleiss erkennbar ist, ohne das Rad demontieren zu müssen. Da der Verschleisssensor je nach Ausführungsform versorgt werden muss oder zumindest eine elektrische Leitung benötigt, um ein Signal weiterzuleiten, muss auch der Bremssattel zumindest mit einem Kabel oder einer anderen Versorgungsleitung versehen werden.

Weiteres Zubehör, das am Bremssattel befestigt werden kann, sind: ABS- Sensoren, Pressluftkühlung für die Bremsscheibe, eine Telemetrievorrichtung für den Reifendruck oder einen Reifenverschleisssensor usw. Da Bremssättel technisch sehr präzise gefertigte Bauelemente sind, die meist mittels Präzisionsguss hergestellt werden, lassen sich bei der Fertigung die Befestigungselemente für Zubehör leicht integrieren.

In einer anderen Ausführungsform liegt eine Lippe im eingebauten Zustand auf der Mantelfläche der Bremsscheibe auf. Damit lässt sich das Eindringen von Schmutz oder Fremdkörpern zwischen Bremsschiebe und einem der Bremsbeläge weiter erschweren.

In einer bevorzugten Ausführungsform weist der Bremsbelag mindestens eine zusätzliche Lippe auf, die auf der, der Bremsscheibe abgewandten Seite des Bremsbelags angeordnet ist. Dadurch ist es möglich, z.B. die Bremskolben der Bremszange oder andere Zuspanneinrichtungen vor Verschmutzung zu schützen.

Eine andere Ausführungsform der vorliegenden Erfindung liefert einen Satz Bremsbeläge. Der Bremsbelagsatz weist mindestens zwei Bremsbeläge für eine Scheibenbremse auf. Die Bremsbeläge des Satzes besitzen dabei jeweils mindestens einen Reibbelag mit mindestens einer der Bremsscheibe zugewandten Reibfläche.

Der Bremsbelagsatz ist dadurch gekennzeichnet, dass mindestens einer der Bremsbeläge mindestens eine Lippe aufweist, die einstückig an der Trägerplatte des Bremsbelags angeordnet ist. Dabei steht die Lippe über die Reibfläche des Reibbelags vor und überdeckt die Mantelfläche der Bremsscheibe, die von der Bremszange umfasst wird. Die Überdeckung ist dabei so ausgeführt, dass bei neuen Bremsbelägen in der Ruhestellung die Lippe gerade in die Ebene eindringt, die durch den Spalt zwischen Reibbelag und Bremsscheibe definiert ist. Damit wird der Spalt gegen direkte Schmutzeinwirkung verschlossen.

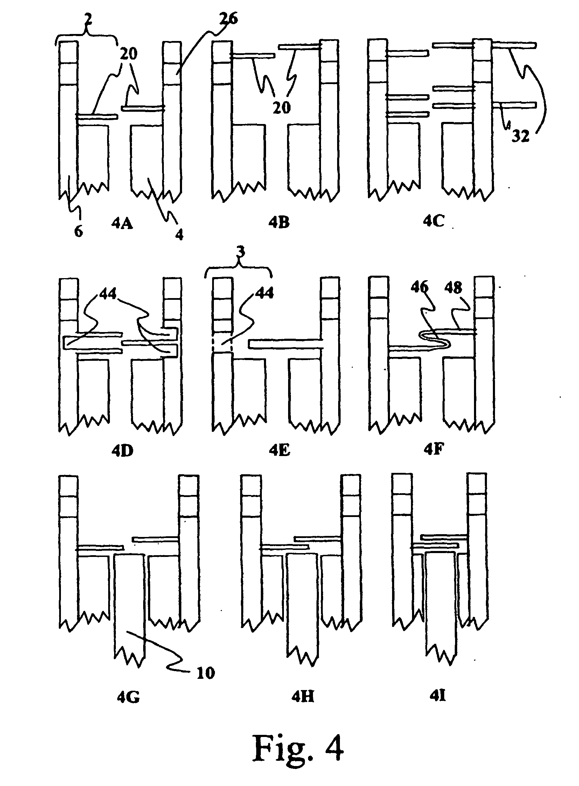

Bevorzugt, weist mindestens einer der Bremsbeläge mindestens eine Ausnehmung auf, um mindestens eine Lippe eines anderen Bremsbelags aufzunehmen. Damit kann beispielsweise in dem Bremsbelagsatz nur ein Belag eine besonders hohe Lippe aufweisen, die im eingebauten Zustand die Spalten beider Bremsbeläge verdeckt, und bei verschlissenen Bremsbelägen durch den zweiten Bremsbelag tritt (siehe Fig. 4E).

Vorzugsweise sind beide Bremsbeläge mit Lippen ausgestattet, so dass jeder Bremsbelag seinen eigenen Spalt zwischen Scheibe und Reibbelag verdecken kann.

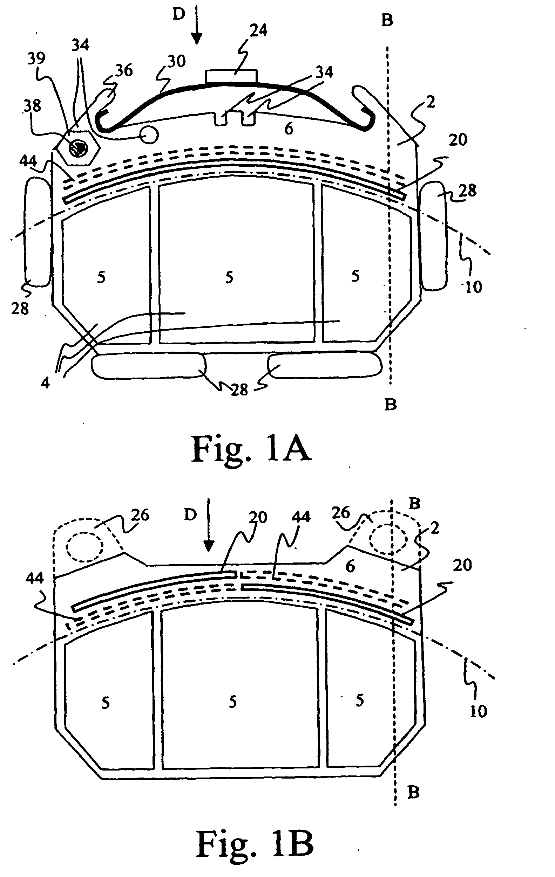

In einer bevorzugten Ausführungsform sind die Lippen der Bremsbeläge jeweils so angeordnet, dass sie im eingebauten Zustand verschachtelt angeordnet sind, damit kann z.B. erreicht werden, dass die Lippen jeweils auch bei verschlissenen Reibbelägen nicht an andere Lippen oder den anderen Bremsbelag stossen (siehe Fign. 1B, 4A bis D).

Bevorzugt sind beide Bremsbeläge im wesentlichen identisch ausgebildet. Durch eine geschickte Wahl der Anordnung der Lippen kann ein Bremsbelagsatz aus Bremsbelägen bestehen die mit dem gleichen Werkzeug hergestellt sind (siehe Fig. 1B).

Bevorzugt sind beide Bremsbeläge durch eine gemeinsame elastische Lippe verbunden (siehe Fig. 4F). Dadurch kann der bestmögliche Schutz gegen Eindringen von Schmutz in die Spalte zwischen Bremsscheibe und Reibbelag gewährleistet werden.
Figur 1A zeigt einen Querschnitt einer Scheibenbremse mit einem erfindungsgemässen Bremsbelag.
Figur 1B zeigt einen Querschnitt einer Scheibenbremse mit einem erfindungsgemässen Bremsbelag gemäss einer anderen Ausführungsform.
Figur 2A zeigt eine Aufsicht auf eine Scheibenbremse gemäss des Standes der Technik aus radialer Richtung,
Figur 2B zeigt eine Aufsicht auf eine erfindungsgemässe Ausführungsform der Scheibenbremse aus radialer Richtung,
Figur 3A zeigt eine Entlang der Linie A-A teil-geschnittene Ansicht der Scheibenbremse von Figur 2A,
Figur 3B zeigt eine Entlang der Linie B-B teil-geschnittene Ansicht der Scheibenbremse von Figur 1B, bzw. 2B,
Figuren 4A bis I zeigen jeweils besondere Ausführungsformen Lippe des Bremsbelags als Detail C von Figur 3B.

Figur 1A zeigt einen Bremsbelag 2 gemäß einer Ausführungsform der vorliegenden Erfindung. Der Bremsbelag weist eine Lippe 20 auf, die im eingebauten Zustand die durch die gestrichelte Linie 10 angedeutete Bremsscheibe von aussen überragt. Durch die Lippe 20 wird der Spalt zwischen Bremsscheibe 10 und den Reibbelägen 4 abgedeckt und so gegen Eindringen von Schmutz geschützt. In dem Bremsbelag ist weiter ein Bereich 44 gestrichelt dargestellt. Der Bereich 44 deutet einen Bereich an, an dem sich eine Lippe eines zugeordneten Bremsbelags befinden kann (der sich in der Figur über der Zeichenebene parallel dazu erstrecken würde). Der Bremsbelag 2 kann in dem Bereich 44 Ausnehmungen aufweisen, um bei verschlissenern Reibbelag die Lippe des gegenüberliegenden Reibbelags aufzunehmen. Die Ausnehmung kann dabei auch als Durchbruch ausgeführt sein.

Die Trägerplatte des Reibbelags weist am oberen Rand eine umlaufende Lippe 20 mit einem Innenradius ri und einem Aussenradius ra auf, wobei ri geringfügig größer als der Durchmesser der Bremsscheibe ist. Dabei ist ra derart gewählt, dass eine ausreichende Festigkeit des Stegs vorliegt. Bei dem zugeordneten Bremsbelag ist ebenfalls am oberen Rand in dem mit 44 bezeichneten Bereich eine umlaufende Lippe angebracht, die mit einem Innenradius Ri und einem Aussenradius Ra auf, wobei Ri geringfügig größer ri gewählt ist, so dass die beiden umlaufenden Lippen beim Bremsvorgang gegenseitig eintauchen können. Mit dieser Ausführungsform besteht sowohl im Neuzustand der Bremsbeläge als auch im Verschlissenen Zustand immer eine Überdeckung der Spalten zwischen Reibbelag und Bremsscheibe. Die Abmessungen der Lippen können sogar so gewählt werden, dass schon im Neuzustand eine gegenseitige Überdeckung besteht und somit verhindert wird, dass Schmutz in den Bereich über die Öffnung auf die Reibfläche gelangt.

Der Bremsbelag kann weiter eine Trägerplatte 6, und Reibbeläge 4 auf weisen. Die Reibbeläge wissen mit dem Reibfläche 5 in Richtung der Bremsscheibe. Die Reibfläche 5 ist dazu bestimmt durch die Reibung mit der Bremsschiebe die Bremswirkung zu erzielen. Die Trägerplatte 6 weist an einem Ende Aufnahmeelemente 36 für eine Niederhaltefeder 30 auf. Die Niederhaltefeder 30 ist als eine Blattfeder dargestellt. Die Niederhaltefeder 30 dient dazu, zu verhindern, daß der Bremsbelag 2 bei Bewegungen des Fahrwerks gegen die Führungen 28, des Belagschachts eines Bremssattels schlägt und diese beschädigt. Die Niederhaltefeder 30 ist in der Figur durch ein Verriegelungselement 24 gesichert, das den gesamten Bremsbelag 2 am herausfallen nach oben hindert. Die in der Zeichnung dargestellte Blattfeder 30 kann z.B. durch Schraubenfederelemente ergänzt bzw. ersetzt werden. Die Trägerplatte 6 weist außerdem Aufnahmeelemente 34 für Zubehör auf. In einem Aufnahmeelement 34 ist ein Verschleißsensor 38 mittels einer Mutter 39 eingeschraubt. Der Verschleißsensor 38 kann auch in dem Reibbelag 4 oder zwischen dem Reibbelag 4 und der Trägerplatte 6 angeordnet sein. Bevorzugt kann das Zubehör auch während der Herstellung von Trägerplatte 6 und Reibbelag 4 in den Bremsbelag 2 integriert werden. Bei dem Aufbau des Bremsbelags 2, können sowohl die Trägerplatte 6 als auch der Reibbelag 4 aus dem selben Material gefertigt sein, was außerdem den Vorteil aufweist, dass selbst wenn der Reibbelag 4 vollständig aufgebraucht ist, die Trägerplatte 6 die Bremsscheibe nicht beschädigt, da sie aus dem selben Material gefertigt ist.

Figur 1B zeigt eine einfachere Ausführungsform eines Bremsbelags 2. Wie der Bremsbelag von Figur 1A weist der Bremsbelag 2 weist eine Lippe 20 auf, die jedoch im Gegensatz zu der in Figur 1A gezeigten geteilt ist. Durch die Anordnung der Lippe 20 in verschachtelter Anordnung kann nur eine Ausführung des Bremsbelags verwendet werden. Dadurch kann z.B. für Kleinserien der Aufwand für Formen und Werkzeuge halbiert werden. Die gezeigte Version eines Bremsbelags kann bei der Montage etwas umständlicher sein, falls die Lippen sich auch schon bei neuen Bremsbelägen überlappen, da dann beide Bremsbeläge gleichzeitig montiert werden müssen. Dies kann aber dadurch umgangen werden, dass Elastische Lippen verwendet werden, die bei der Montage aneinander vorbei gleiten.

Wie in Figur 1A bezeichnet auch hier der gestrichelt dargestellte Bereich 44 einen Bereich an dem sich eine Lippe eines zugeordneten Bremsbelags befinden kann. Abweichend von Figur 1A sind in Figur 1B andere Elemente 26 als Aufnahme für eine Verriegelung vorgesehen. Die Aufnahmeelemente 26 für eine Verriegelung sind gestrichelt dargestellt, um anzudeuten dass sie nicht notwendigerweise vorhanden sein müssen. Wie in Figur 1A bezeichnen die Bezugszeichen 4 die Reibbeläge, das Bezugszeichen 6 die Trägerplatte, und die mit 10 bezeichnete gestrichelte Linie den Ort der Bremsscheibe.

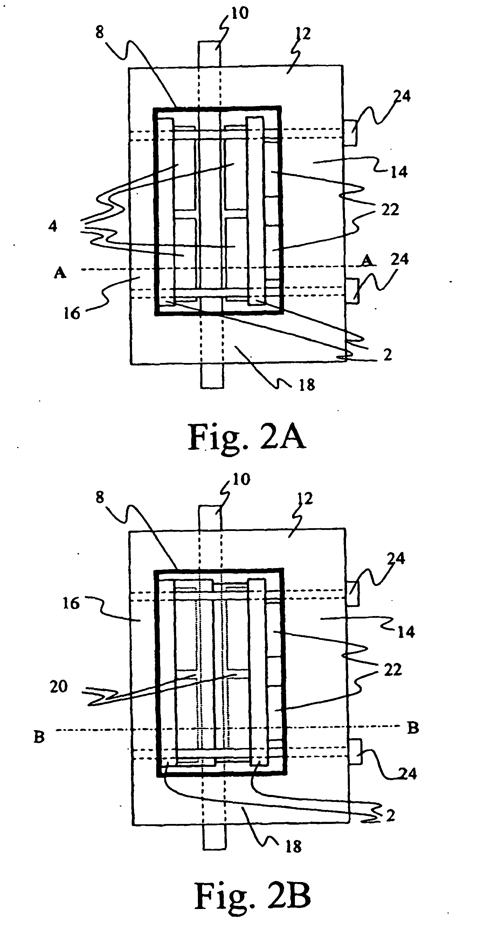

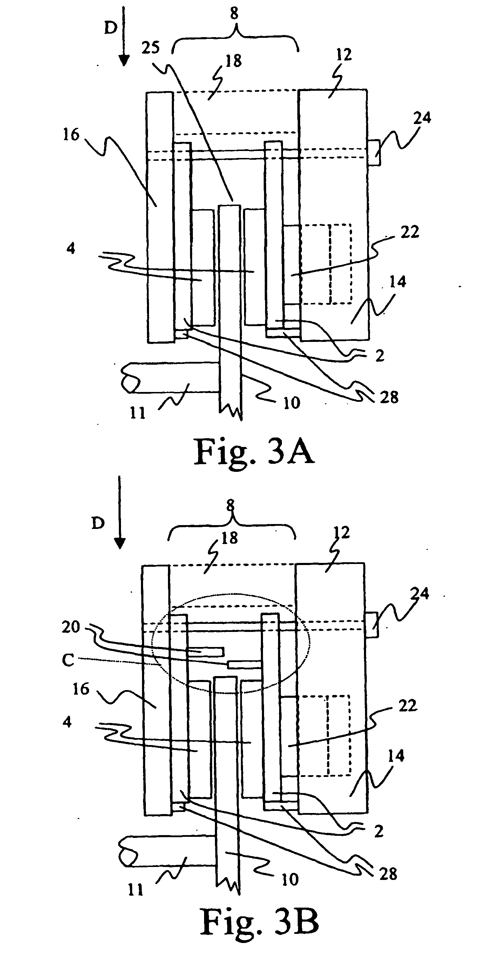

In den Figuren 1A und 1B bezeichnet der Pfeil D die Blickrichtung der Figuren 2A und 2B, und die Linie B-B dabei eine Schnittebene für die Figuren 3a und 3B.

Figuren 2A und 2 B zeigen Aufsichten auf eine Scheibenbremse gemäß des Standes der Technik und gemäß der vorliegenden Erfindung aus radialer Richtung. Beiden Figuren gemeinsam ist dabei die Bremsscheibe 10, die von einer Bremszange 12 umgriffen wird. Die Bremszange 12 lässt sich dabei im wesentlichen in die Teile Zuspanneinheit 14, Gegenhaltung 16 und die Verbindungsstege 18 und unterteilen. Die Zuspanneinheit 14 ist in dem vorliegenden Beispiel mit zwei Bremszylindern mit zwei Bremskolben 22 ausgestattet. Die Bremsbeläge 2 befinden sich in einer Öffnung 8 zur Montage der Bremsbeläge 2. Die Öffnung ist durch eine besonders breite Strichbreite hervorgehoben. Die Bremsbeläge werden mittels Verriegelungselementen 24 in der Bremszange 12 gesichert. Niederhaltefedern sind in den Figuren 1B bis 4 der Klarheit willen nicht dargestellt.

Im Stand der Technik (Fig. 2A) können die Spalten zwischen den Reibbelägen 4 und der Bremsscheibe 10 durch die Montageöffnung 8 eingesehen werden. Somit können Schmutzpartikel und Flüssigkeiten ohne weiteres durch die Öffnung 8 in den Zwischenraum / den Spalt zwischen Reibbelag 4 und Bremsscheibe 10 eindringen und die, in der Einleitung beschriebenen Probleme verursachen.

In der dargestellten erfindungsgemäßen Ausführungsform der Scheibenbremse (Fig. 2B) können die Spalten zwischen den Reibbelägen (gepunktet dargestellt) und der Bremsscheibe 10 durch die Montageöffnung 8 nicht eingesehen werden. Somit können Schmutzpartikel und Flüssigkeiten nicht ohne weiteres durch die Öffnung 8 in den Spalt zwischen Reibbelag und Bremsscheibe 10 eindringen, da der direkte Weg durch die Lippen 20 verlegt ist.

Figuren 3A und 3B zeigen jeweils teilweise geschnittenen Ansichten der in Fig. 2A und 2B dargestellten Scheibenbremsen gemäß des Standes der Technik und gemäß der vorliegenden Erfindung. Beiden Figuren gemeinsam ist dabei die Bremsscheibe 10 die an eine Welle 11 befestigt ist, und von einer Bremszange 12 umgriffen wird. Die Bremszange 12 lässt sich dabei im wesentlichen in die Teile Zuspanneinheit 14, Gegenhaltung 16 und die Verbindungsstege 18 und unterteilen. Die Zuspanneinheit 14 ist in dem vorliegenden Beispiel mit Bremszylindern mit Bremskolben 22 ausgestattet. Die Bremsbeläge 2 befinden sich in einer Öffnung 8 zur Montage der Bremsbeläge 2, und werden mittels der Führungen 28 an ihrem Ort gehalten und mittels der Elemente 24 ihrem Ort verriegelt.

Figur 3A zeigt eine, entlang der Linie A-A teilweise geschnittene Ansicht der Scheibenbremse von Figur 2A des Standes der Technik. In Fig. 3A können die Spalten zwischen den Reibbelägen 4 und der Bremsscheibe 10 durch die Montageöffnung 8 von oben eingesehen werden. Somit können Schmutzpartikel und Flüssigkeiten ohne weiteres von oben durch die Öffnung 8 in den Zwischenraum / den Spalt zwischen Reibbelag 4 und Bremsscheibe 10 eindringen und die, in der Einleitung beschriebenen Probleme verursachen. Dabei ist in Fig. 3a die Mantelfläche der Bremsscheibe 10 mit dem Bezugszeichen 25 bezeichnet.

Figur 3B zeigt eine entlang der Linie B-B teilweise geschnittene Ansicht der Scheibenbremse von Figur 2B. In der dargestellten erfindungsgemässen Ausführungsform der Scheibenbremse (Fig. 3B) können die Spalten zwischen den Reibbelägen 4 und der Bremsscheibe 10 durch die Montageöffnung 8 von oben nicht eingesehen werden. Somit können auch von oben keine Schmutzpartikel und Flüssigkeiten durch die Öffnung 8 in den Spalt zwischen Reibbelag 4 und Bremsscheibe 10 eindringen, da der direkte Weg durch die Lippen 20 blockiert ist.

Figuren 4A bis I zeigen jeweils besondere Ausführungsformen Lippe des Bremsbelags als Detail C von Figur 3B. In den Figuren 4A bis 41 wurde um grössere Klarheit zu erreichen auf die Darstellung der Bremszange völlig und auf die Darstellung der Bremsscheibe teilweise verzichtet.

Alle Teile von Figur 4 stellen Schnitte durch verschiedene Bremsbelagsätze dar.

In Teil 4A ist beispielsweise ein Bremsbelagsatz wie in den Figuren 1A, 2B und 3B dargestellt. Der Bremsbelagsatz weist dabei zwei Bremsbeläge 2 auf die in der dargestellten Ausführung eine Trägerplatte 6, einem Reibbelag und jeweils mindestens eine Lippe 20 aufweisen. Des Weiteren weisen die Bremsbeläge in dieser Ausführungsform Aufnahmen für eine Verriegelung 28 auf.

In Teil 4B sind die Lippen 22, abweichend 4A oberhalb der Aufnahmen für eine Verriegelung 28 angebracht.

Teil 4C stellt im wesentlichen eine Kombination der Lippen von 4A und 4B dar, die weiterhin noch mit zwei Lippen 32 zum Schutz von Zuspanneinrichtungen versehen ist. Dies würde bedeuten, dass sich die Zuspannvorrichtungen in der Zeichnung auf der rechten Seite befinden würden. Die Lippen 32 können auch die Zuspanneinrichtungen der Scheibenbremse gegen Verschmutzung geschützt werden.

Teil 4D stellt eine Ausführungsform dar, in der die Lippen verschachtelt sind. Weiterhin weisen die Bremsbeläge (hier in der Trägerplatte angeordnete) Ausnehmungen 44 auf. Diese Ausnehmungen 44 gestatten es die Lippen länger zu gestalten, und so auch eine gegenseitige Überdeckung der Lippen im Neuzustand, selbst bei dicken Reibbelägen und bei dünnen Bremsscheiben zu gewährleisten.

Teil 4E stellt einen Bremsbelagsatz dar, beidem nur ein Bremsbelag eine Lippe, und der andere Bremsbelag 3 einen Durchbruch 44 aufweist. Die Lippe kann dabei viel höher ausgeführt werden. Diese Konstruktion bietet sich besonders dann an, wenn der Bremsbelag 3 auf der Seite der Zuspanneinrichtung in den Bremssattel eingesetzt wird. Diese Konstruktion ermöglicht es besonders einfach, eine Verschleißanzeige in die Lippe zu integrieren. Beispielsweise durch Markierungen an der Lippe die anzeigen, dass der Bremsbelag ausgetauscht werden muß, wenn die Markierung z.B. hinter dem zweiten Bremsbelag sichtbar wird, oder auch in dem zweiten Belag verschwindet.

Teil 4F stellt einen Bremsbelagsatz dar, beidem die beiden Bremsbeläge durch eine gemeinsame Lippe 46/48 miteinander verbunden sind. Durch diese Konstruktion kann eine besonders gute Schmutzresistenz erreicht werden. Die Lippe weist dabei zwei verschiedene Bereiche auf, die sich in ihrer Festigkeit unterscheiden. Das Basiselement 48 der Verbindungslippe ist im wesentlichen starr, um der Lippe eine definierte Form zu geben. Der mittlere Abschnitt 46 ist im wesentlichen elastisch, oder beweglich, damit sich die Bremsbeläge gegenseitig bewegen können. Diese Lippe kann beispielsweise aus einem Elastomer gestaltet werden, das an den Basiselementen 48 dicker ausgeführt ist, und im mittleren Abschnitt 46 dünner und damit elastischer Ausgeführt ist. Die Verbindungslippe kann auch aus einem Verbundwerkstoff, beispielsweise einem Fasergewebe, das in den Basiselementen 48 eingeharzt ist, und im mittleren Abschnitt 46 unbehandelt und beweglich ist.

Die Teile 4G bis 41 stellen die Wirkungsweise der Lippen in eine Scheibenbremse dar, deren Reibbeläge Verschleiß unterworfen ist. Dabei stellt Teil 4G den Neuzustand dar. Teil 4H stellt einen mittleren Verschleiß dar. Teil 4I stellt einen vollständig verschlissenen Satz Bremsbeläge dar, der ausgetauscht werden sollte. Wie in der Zeichnung gut zu erkennen, ist der Spalt zwischen Reibbelag und Bremsscheibe in jedem Zustand des Verschleißes gegen Verunreinigungen und Schmutz geschützt.

Wie in den Vorstehenden Zeichnungen gut zuerkennen, ist die Lippe bevorzugt an einer Trägerplatte des Bremsbelags angebracht. Die Lippe kann dabei auch direkt aus dem Material geformt sein, aus dem die Trägerplatte besteht. Falls die Trägerplatte beispielsweise aus Gusseisen gefertigt ist, kann die Lippe direkt beim Gießen mit angeformt werden. Die Lippe kann aber auch aus dem Material geformt sein, aus dem der Reibbelag besteht. Es ist sogar möglich sowohl die Lippe als auch die Trägerplatte als auch den Reibbelag aus einem Material zu formen.

Es sollte bemerkt werden, dass die Lippe den Reibbelag zur Bremsscheibe nicht komplett abdichtet, und es somit durchaus vorkommen kann dass bei einem Geländewagen der durch Wasser watet, z.B. Wasser oder Schlamm zwischen Reibbelag und Bremsscheibe kommen kann. Dadurch dass die Lippe im allgemeinen nicht auf der Bremsscheibe aufliegt, wird aber auch der Reibungswiderstand der Bremse verringert, wenn nicht gebremst wird. Dadurch dass zwischen der Lippe und der Bremsscheibe im allgemeinen noch ein Spalt besteht, kann der Bremsbelag auch für innenbelüftete Bremsscheiben verwendet werden, ohne die Luftströmung im inneren der Bremsscheibe zu unterbinden.

Gemäß eines Aspektes der vorliegenden Erfindung liefert die Erfindung einen Bremsbelag für Scheibenbremsen. Dabei kann der Bremsbelag sind eine Trägerplatte und einen Reibbelag aufweisen, und dabei kann die Trägerplatte und der Reibbelag aus dem selben Material hergestellt sein. Der Bremsbelag kann weiter Aufnahmeelemente für Niederhaltefedern aufweisen.

Der Bremsbelag beziehungsweise der Reibbelag und die Trägerplatte können aus allen, dem Fachmann bekannten Reibbelagsmaterialien bestehen. Typischerweise werden Reibbeläge aus Sintermaterialien oder Duroplasten im Materialverbund hergestellt. Sintermaterialien bestehen meist aus Mischungen von Eisen- und Nichteisenmetallen. Duroplaste können aus Phenolharzen Epoxidharzen usw. hergestellt werden. Die Duroplaste werden zur Optimierung der Materialeigenschaften mit Fasern und anderen Füllstoffen verstärkt. Die Fasern können dabei z.B. Natur-, Mineral-, Polymer-, Metall-, Aramid- und/oder Kohlefasern sein. Die Fasern können entweder faserig, als Hackschnitzel, versponnen, verwoben, verstrickt und/oder beispielsweise als Fließ verarbeitet werden. Metallische Füllstoffe können beispielsweise Eisen- oder Nichteisenmetalle, wie beispielsweise Fe, Sn, Zn, Ni, Ag, Al, Mn und/oder Mn sein. Nichtmetallische Füllstoffe können beispielsweise Mineralstoffe wie Calciumhydroxid, Schwerspat, Kautschuk und/oder Vermiculit sein.

Vorzugsweise umfaßt der Bremsbelag weiter eine Wärmeisolation. Diese Wärmeisolation kann direkt in dem Material des Bremsbelags enthalten sein oder sich als eigenständige Schicht in oder auf dem Bremsbelag befinden. Die genaue Form der Wärmeisolierung ist dabei nicht wichtig, sie kann z.B. durch eingearbeitete Lufttaschen, besondere beispielsweise schwammartige Strukturen oder andere Materialien ausgebildet werden.

Die Scheibenbremse, der Bremssattel, die Bremsbeläge können dabei hydraulisch, pneumatisch, elektrisch, magnetisch, elektromechanisch oder auch mechanisch angesteuert werden. Es ist dabei zu bemerken, dass die erfindungsgemäße Scheibenbremse sowohl für Außensattel- als auch für Innensattel- Scheibenbremsen geeignet ist. Bei Außensattel- Scheibenbremsen greift der Bremssattel in bekannter Weise von außen über die Bremsscheibe. Bei Innensattel-Scheibenbremsen greift der Bremssattel in von innen über die Bremsscheibe. Die erfindungsgemäßen Bremsbeläge können sowohl bei Festsattel- als auch bei Schwimmsattel-Scheibenbremsen angewendet werden. Die erfindungsgemäßen Bremsbeläge sind sowohl Für Einkolben- als auch für Mehrkolbenbremssättel geeignet. Die Erfindung ist nicht auf den Einsatz mit einer bestimmten Bremsscheibe beschränkt. Der erfindungsgemäße Bremsbelag kann zusammen mit einfachen, durchbrochenen, gefurchten, strukturierten, geschwungenen, und/oder innenbelüfteten Bremsscheiben eingesetzt werden. Die Bremsscheibe kann fest oder schwimmend gelagert sein. Sogar der Einsatz in einer Mehrscheibenbremse ist denkbar. Die vorstehend erwähnten Fluidkühlungen können beispielsweise bei LKW als eine Preßluftkühlung ausgeführt werden, bei der z.B. vom pneumatischen System der Bremsanlage ein gesicherter Speicher gefüllt wird, der bei Bedarf die Bremse, oder Teile der Bremse per Druckluft kühlt. Bei Fahrzeugen ohne pneumatisches Bremssystem können die Bremsen an den vorhandenen oder separaten Kühlkreislauf, wie beispielsweise für Öl oder Kühlwasser angeschlossen werden.

Die Scheibenbremse, der Bremssattel und der Bremsbelag können in jedem technischen Gebiet eingesetzt werden, in dem Drehbewegungen verzögert werden sollen, nämlich in sämtlichen automotiven Anwendungen, in Land-, Schienen-, Wasser-, Luftfahrzeugen, in denen Wellen und Räder abgebremst werden müssen. Weitere Anwendungen sind Bremsen für Maschinen, Motoren, Rotoren, Windräder, Fahrgeschäfte und so weiter.

### Liste der Bezugszeichen

- 2: Bremsbeläge
- 3: Bremsbelag
- 4: Reibbeläge
- 5: Reibfläche
- 6: Trägerplatte
- 8: Öffung zur Montage der Bremsbeläge
- 10: Bremsscheibe
- 11: Welle (Abschnitt)
- 12: Bremssattel
- 14: Zuspannseite des Bremssattels
- 16: Gegenhaltung des Bremssattels
- 18: Verbindungssteg des Bremssattelss
- 20: Schutzlippen
- 22: Bremskolben / Zylinder
- 24: Verrigelung
- 25: Mantelfläche der Bremsscheibe
- 26: Aufnahme für Verrigelung
- 28: Führungen
- 30: Niederhaltefeder
- 32: Lippe zum Schutz von Zuspanneinrichtungen.
- 34: Aufnahmeelemente für Zubehör
- 36: Aufnahmeelemente für eine Niederhaltefeder
- 38: Verschleisssensor
- 39: Mutter
- 44: Ausnehmungen / Lippenanordnungen auf zugeordneten Bremsbelägen
- 46: Elastischer Bereich
- 48: Starrer Bereich

## Patentansprüche

1. Bremsbelag (2) an einer Scheibenbremse mit einer Bremsscheibe (10), wobei der Bremsbelag (2) eine Trägerplatte (6) und mindestens einen Reibbelag (4) mit mindestens einer der Bremsscheibe (10) zugewandten Reibfläche (5) und einen Reibbelagschutz (20) aufweist, der so angeordnet ist, dass er die Reibfläche (5) des Reibbelags (4) überragt, und so im eingebauten Zustand sich in den Bereich der Mantelfläche (25) der Bremsscheibe (10) erstreckt und einen, zwischen der Bremsscheibe (10) und der Reibfläche (5) gebildeten Spalt gegen Schmutzeinwirkung von aussen abdeckt,
**dadurch gekennzeichnet, dass** der Reibbelagschutz (20) einstückig mit der Trägerplatte (6) ausgebildet ist.

2. Bremsbelag (2) gemäss Anspruch 1, **dadurch gekennzeichnet, dass** der Reibbelagschutz (20) an dem Bremsbelag (2) so angeordnet ist, dass er im eingebauten Zustand mit einem Reibbelagschutz (20) eines gegenüberliegenden Bremsbelags zueinander verschachtelt angeordnet ist.

3. Bremsbelag (2) gemäss einem der vorstehenden Ansprüche, **dadurch gekennzeichnet, dass** der Reibbelagschutz (20) mindestens eine Lippe aus Gummi oder aus einem ähnlich elastischen Material aufweist.

4. Bremsbelag gemäss einem der vorstehenden Ansprüche **dadurch gekennzeichnet, dass** der Bremsbelag mindestens eine Ausnehmung (44) aufweist, die geeignet ist, mindestens einen Reibbelagschutz (20) eines gegenüberliegenden Bremsbelags aufzunehmen.

5. Bremsbelag (2) gemäss einem der vorstehenden Ansprüche, **dadurch gekennzeichnet, dass** der Reibbelagschutz (20) mindestens eine im wesentlichen starr ausgebildete Lippe aufweist.

6. Bremsbelag (2) gemäss einem der vorstehenden Ansprüche, **dadurch gekennzeichnet, dass** der Reibbelagschutz (20) aus mindestens einem separaten Teil gebildet ist, dass einstückig mit der Trägerplatte des Bremsbelags verbunden ist.

7. Bremsbelag (2) gemäss einem der vorstehenden Ansprüche, **dadurch gekennzeichnet, dass** der Reibbelagschutz (20) im eingebauten Zustand auf der Mantelfläche (25) der Bremsscheibe (10) aufliegt.

8. Bremsbelagsatz mit mindestens zwei Bremsbelägen (2,3) einer Scheibenbremse, **dadurch gekennzeichnet, dass** mindestens einer der Bremsbeläge (2,3) ein Bremsbelag (2) gemäss einem der Ansprüche 1 bis 7 ist.

9. Bremsbelagsatz gemäss Anspruch 8, **dadurch gekennzeichnet, dass** die Reibbelagschutzvorrichtungen (20) der jeweiligen Bremsbeläge (2) im eingebauten Zustand verschachtelt angeordnet sind.

10. Bremsbelagsatz gemäss Anspruch 8 oder 9, **dadurch gekennzeichnet, dass** beide Bremsbeläge (2) im Wesentlichen identisch ausgebildet sind.

11. Bremsbelagsatz gemäss einem der Ansprüche 8 bis 10, **dadurch gekennzeichnet, dass** mindestens einer der Bremsbeläge (2, 3) des Bremsbelagsatzes mindestens eine Ausnehmung (44) aufweist, die geeignet ist, mindestens einen Reibbelagschutz (20) eines anderen Bremsbelags des Bremsbelagsatzes aufzunehmen.

## Claims

1. Brake pad (2) on a disc brake with a brake disc (10) whereby the brake pad (2) has a backing plate (6) and at least one friction lining (4) with at least one friction surface (5) facing the brake disc (10) and a friction lining protector (20) which is disposed so that it overhangs the friction surface (5) of the friction lining (4) and thus extends in the installed condition into the area of the casing surface (25) of brake disc (10) and covers a gap formed between the brake disc (10) and the friction surface (5) against the effect of dirt from the outside,
**characterised in that** the friction lining protector (20) is formed in one piece with the backing plate (6).

2. Brake pad (2) according to claim 1, **characterised in that** the friction lining protector (20) is disposed on the brake pad (2) in such a way that in the installed condition it is disposed so as to be nested with a friction lining protector (20) of an opposing brake pad.

3. Brake pad (2) according to one of the preceding claims, **characterised in that** the friction lining protector (20) has at least one lip made of rubber or a similar elastic material.

4. Brake pad according to one of the preceding claims, **characterised in that** the brake pad has at least one recess (44) which is suitable to take at least one friction lining protector (20) of an opposing brake pad.

5. Brake pad (2) according to one of the preceding claims, **characterised in that** the friction lining protector (20) has at least one essentially rigidly constructed lip.

6. Brake pad (2) according to one of the preceding claims, **characterised in that** the friction lining protector (20) is made up of at least one separate part that is connected in one piece to the brake pad's backing plate.

7. Brake pad (2) according to one of the preceding claims, **characterised in that** the friction lining protector (20) lies in contact with the casing surface (25) of the brake disc (10) in the installed condition.

8. Brake pad set with at least two brake pads (2, 3) of a disc brake, **characterised in that** at least one of the brake pads (2, 3) is a brake pad (2) according to one of claims 1 to 7.

9. Brake pad set according to claim 8, **characterised in that** the friction lining protector devices (20) of the respective brake pads (2) are disposed in a nested arrangement in the installed condition.

10. Brake pad set according to claim 8 and 9, **characterised in that** both brake pads (2) are essentially identical.

11. Brake pad set according to one of claims 8 to 10, **characterised in that** at least one of the brake pads (2, 3) of the brake pad set has at least one recess (44) which is suitable to take at least one friction lining protector (20) of another brake pad of the brake pad set.

## Revendications

1. Patin de frein (2) sur un frein à disque pourvu d'un disque de frein (10), le patin de frein (2) comprenant une plaque porteuse (6) et au moins une garniture de friction (4) avec au moins une surface de friction (5) tournée vers le disque de frein (10) et avec une protection de patin de frein (20) qui est agencée de manière à dépasser au-delà de la surface de friction (5) de la garniture de friction (4) et qui s'étend ainsi, dans l'état monté, jusque dans la zone de la surface enveloppe (25) du disque de frein (10) et qui recouvre depuis l'extérieur, à l'encontre d'un encrassement, un intervalle formé entre le disque de frein (10) et la surface de friction (5),
**caractérisé en ce que** la protection de garniture de friction (20) est réalisée d'un seul tenant avec la plaque porteuse (6).

2. Patin de frein (2) selon la revendication 1, **caractérisé en ce que** la protection de garniture de friction (20) est agencée sur le patin de frein (2) de manière à être disposée, dans l'état monté, en étant emboîtée avec une protection de garniture de friction (20) d'un patin de frein opposé.

3. Patin de frein (2) selon l'une des revendications précédentes, **caractérisé en ce que** la protection de garniture de friction (20) comprend au moins une lèvre on caoutchouc ou en un matériau d'élasticité similaire.

4. Patin de frein selon l'une des revendications précédentes, **caractérisé en ce que** le patin de frein présente au moins un évidement (44) qui convient pour recevoir au moins une protection de garniture de friction (20) d'un patin de frein opposé.

5. Patin de frein (2) selon l'une des revendications précédentes, **caractérisé en ce que** la protection de garniture de friction (20) comprend au moins une lèvre réalisée sensiblement rigide.

6. Patin de frein (2) selon l'une des revendications précédentes, **caractérisé en ce que** la protection de garniture de friction (20) est formée par au moins une partie séparée qui est reliée d'un seul tenant à la plaque porteuse du patin de frein.

7. Patin de frein (2) selon l'une des revendications précédentes, **caractérisé en ce que** la protection de garniture de friction (20) repose, dans l'état monté, sur la surface enveloppe (25) du disque de frein (10).

8. Jeu de patins de frein comportant au moins deux patins de frein (2, 3) d'un frein à disque, **caractérisé en ce que** l'un au moins des patins de frein (2, 3) est un patin de frein (2) selon l'une des revendications 1 à 7.

9. Jeu de patins de frein selon la revendication 8, **caractérisé en ce que** les dispositifs de protection de garniture de friction (20) des patins de frein respectifs (2) sont agencés en étant emboîtés dans l'état monté.

10. Jeu de patins de trein selon l'une ou l'autre des revendications 8 et 9, **caractérisé en ce que** les deux patins de frein (2) sont réalisés sensiblement identiques.

11. Jeu de patins de frein selon l'une des revendications 8 à 10, **caractérisé en ce que** l'un au moins des patins de frein (2, 3) du jeu de patins de frein présente au moins un évidement (44) qui convient pour recevoir au moins une protection de garniture de friction (20) d'un autre patin de frein du jeu de patina de frein.
